(19) Europäisches Patentamt
European Patent Office
Office européen des brevets

(11) Veröffentlichungsnummer: **0 141 063**
**A2**

(12) # EUROPÄISCHE PATENTANMELDUNG

(21) Anmeldenummer: **84109023.6**

(22) Anmeldetag: **31.07.84**

(51) Int. Cl.⁴: **C 09 B 50/00**
C 09 B 67/24, C 09 B 31/047
C 09 B 43/11, D 06 P 3/06

(30) Priorität: **12.08.83 DE 3329193**

(43) Veröffentlichungstag der Anmeldung:
**15.05.85 Patentblatt 85/20**

(84) Benannte Vertragsstaaten:
**BE CH DE FR GB LI**

(71) Anmelder: **BAYER AG**
**Konzernverwaltung RP Patentabteilung**
**D-5090 Leverkusen 1 Bayerwerk(DE)**

(72) Erfinder: **Weitz, Robert, Dr.**
**Roggendorfstrasse 67**
**D-5000 Koeln 80(DE)**

(72) Erfinder: **Neeff, Rütger, Dr.**
**Berta-von-Suttner-Strasse 22**
**D-5090 Leverkusen(DE)**

(72) Erfinder: **Hugl, Herbert, Dr.**
**Gemarkenweg 9**
**D-5060 Bergisch-Gladbach 2(DE)**

(54) **Verfahren zum Färben von amidgruppenhaltigen Fasermaterialien.**

(57) Die teilweise bekannten Blaufarbstoffe der Formel

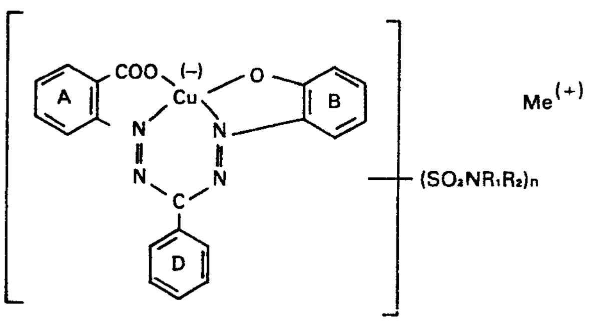

worin

$R_1$ Wasserstoff, Alkyl, Aralkyl, Alkenyl, Cycloalkyl oder Aryl,
$R_2$ Wasserstoff oder Alkyl,
$Me^{\oplus}$ ein Kation und
n 1 oder 2 bedeuten,

eignen sich hervorragend zum Trichromie-Färben von Polyamidfasermaterialien, auf denen man gleichmäßige Färbungen mit gutem Echtheitsniveau erhält.

EP 0 141 063 A2

Croydon Printing Company Ltd

BAYER AKTIENGESELLSCHAFT 5090 Leverkusen, Bayerwerk

Konzernverwaltung RP
Patentabteilung K/ABc

Verfahren zum Färben von amidgruppenhaltigen Fasermaterialien

Die vorliegende Erfindung betrifft ein Verfahren zum Trichromiefärben von amidgruppenhaltigen Fasern, insbesondere Textilmateralien aus synthetischen Polyamiden.

Derartige Substrate wurden bisher praktisch ausschließlich mit einer Mischung aus einem roten und gelben Säurefarbstoff (zumeist aus der Azoreihe) sowie einem sulfogruppenhaltigen blauen Anthrachinonfarbstoff gefärbt.

Letztere weisen jedoch den Nachteil auf, daß sie bei ansonsten hervorragenden Echtheiten eine ungenügende Ozonstabilität zeigen und für manche Anwendungsgebiete, etwa für die Herstellung von Massenartikeln, zu teuer sind.

Versuche, die Anthrachinonblaus durch andere preiswertere blaue Polyamidfarbstoffe, z.B. C.I.Acid Blue 263 und 297 (beide aus der Formazanreihe), zu ersetzen, haben nicht den erwünschten Erfolg gebracht, da diese

Farbstoffe mit den meisten am Markt befindlichen roten und gelben Säurefarbstoffen nicht gut kombinierbar sind.

Es wurde nun überraschenderweise gefunden, daß man eine brauchbare Trichromie erhält, wenn man anstelle der bislang üblichen Anthrachinonfarbstoffe ausgewählte sulfo- und carboxylgruppenfreie nichtreaktive Formazanfarbstoffe einsetzt, die konstitutionell deutlich von den beiden vorstehend erwähnten Typen abweichen und der allgemeinen Formel

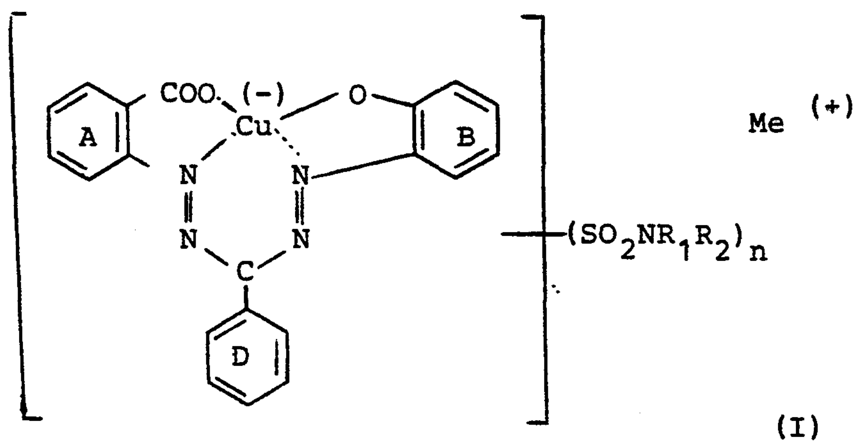

(I)

entsprechen, worin

$R_1$ Wasserstoff, gegebenenfalls substituiertes Alkyl, Aralkyl, Alkenyl, Cycloalkyl oderAryl,

$R_2$ Wasserstoff oder Alkyl,

$Me^{(+)}$ ein Kation und

n die Zahlen 1 oder 2 bedeuten, wobei die Ringe A, B und D weitere in der Farbstoffchemie übliche nichtionische Substituenten tragen können und der Rest $-SO_2NR_1R_2$ mit Ring A und/oder B verknüpft ist.

Gegenstand der Erfindung ist somit ein Verfahren zum Färben von natürlichen und synthetischen Polyamidfasern, das dadurch gekennzeichnet ist, daß man diese mit einer Kombination aus

a) einem Blaufarbstoff der Formel (I),

b) einem Rotfarbstoff der Formel

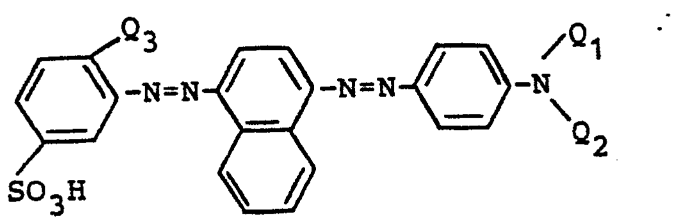

(IIa)

worin $Q_1$ $C_2H_5$ oder $C_2H_4OH$

$Q_2$ $C_2H_5$, $C_2H_4OH$, $CH_2$- 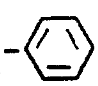 oder $CH_2$- 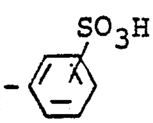

$Q_3$ H, Cl oder $CH_3$ bedeuten, oder

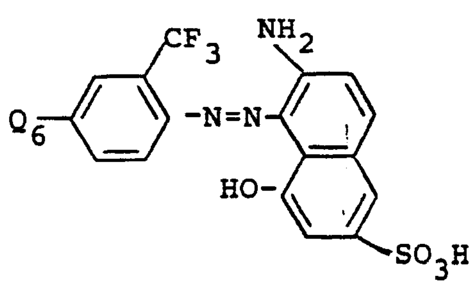

(IIb)

$Q_6$ = Cl, $NHCOQ_7$,
$Q_7$ = $C_1$-$C_4$-Alkyl, Phenyl, Cyclohexyl, NH-$C_1$-$C_4$-Alkyl, NH-Phenyl oder NH-Cyclohexyl oder

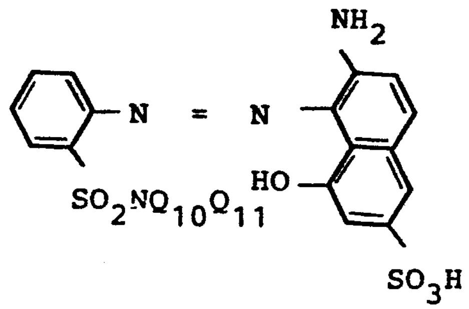

(IIc)

$Q_{10}$ = H, $C_1$-$C_{10}$-Alkyl, Cyclohexyl, Phenyl
$Q_{11}$ = H, $C_1$-$C_4$-Alkyl

c) einem Gelbfarbstoff der Formel

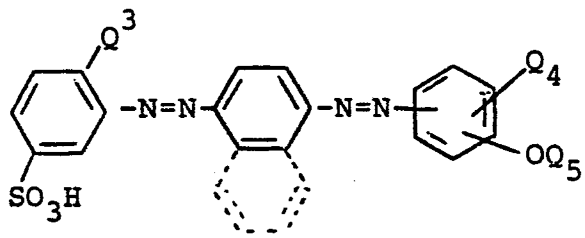

(IIIa)

oder

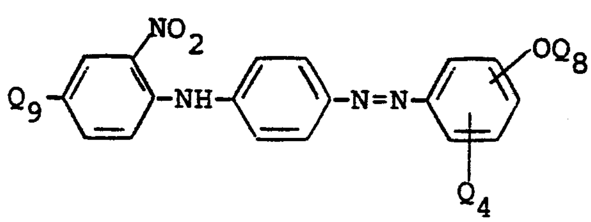

(IIIb)

$Q_8$ = $C_1$-$C_4$-Alkyl, $SO_2$- 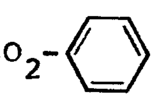 , $C_2$-$C_4$-Hydroxyalkyl,
$Q_9$ = $SO_3H$, $SO_2NHSO_2$- 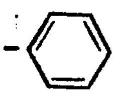 , $SO_2NHSO_2$-$C_1$-$C_4$-Alkyl

worin

$Q_4$ H oder $CH_3$ und

$Q_5$ $C_1$-$C_4$-Alkyl (vorzugsweise $CH_3$ oder $C_2H_5$) oder $C_2$-$C_4$-Hydroxyalkyl (vorzugsweise $CH_2CHOHC_2H_5$)

bedeuten, wobei $-OQ_5$ in ortho- oder para-Stellung zur Azobrücke steht,

färbt.

Die Farbstoffe der Formel I sind teilweise bekannt und beispielsweise in folgender Patentliteratur beschrieben: US-PS 2 662 074, 2 662 075 und 3 139 420.

Geeignete Substituenten in den Ringen A, B und D der Formel I sind z.B. Cl, Br, F, $C_1$-$C_4$-Alkyl, $C_1$-$C_4$-Alkoxy, $CF_3$ und $NO_2$.

Geeignete Alkylreste in der Formel I sind solche mit 1-6 C-Atomen, die weitere Substituenten insbesondere OH, $-OC_1$-$C_4$-Alkyl sowie $-O-C_2H_4-O-C_1$-$C_4$-Alkyl enthalten können.

Geeignete Aralkylreste sind Benzyl und Phenylethyl.

Geeignete Alkenylreste sind Allyl und Butenyl.

Geeignete Arylreste sind Phenylreste, die wie die Ringe A-D substituiert sein können.

Geeignete Cycloalkylreste sind Cyclohexyl und Methylcyclohexyl.

Vorzugsweise stehen $R_1$ und $R_2$ nicht gleichzeitig für Wasserstoff, sondern $R_1$ für Alkyl und $R_2$ für Wasserstoff.

Geeignete Kationen $Me^{(+)}$ sind wasserlöslich-machende Ionen, vorzugsweise der Alkalimetall-Reihe, wie $Li^{(+)}$, $Na^{(+)}$ und $K^{(+)}$.

Bevorzugte Farbstoffe der Formel I sind solche mit $R_1$ = Alkoxyalkyl.

Die Farbstoffe der Formeln II und III sind fast ausschließlich bekannt und beispielsweise unter den folgenden Colour-Index-Bezeichnungen z.T. als sog. "commodities" im Handel erhältlich:

Acid Yellow, 159, 159.1 und 242;

Acid Orange 67, 116, 116.1 und 127;

Acid Red 119, 299 und 299.1, 266.

Trichomien auf der Basis von Mischungen der Farbstoffe I-III zeichnen sich dank der guten Kombinierbarkeit der Formazanfarbstoffe I durch eine gute Reproduzierbarkeit aus.

Das Färben erfolgt vorzugsweise nach dem Ausziehverfahren bei einem Flottenverhältnis von 1:5-1:50 und Temperaturen von 40-130°C.

Ein weiterer Gegenstand der vorliegenden Erfindung sind im Rahmen der Farbstoffe der Formel I neue Formazanverbindungen der Formel

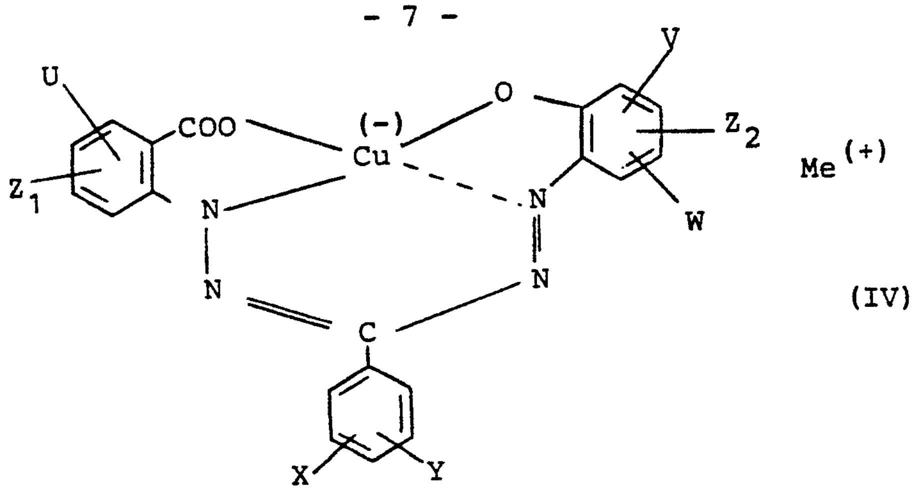

(IV)

worin

U, V, W, X und Y unabhängig voneinander Wasserstoff, Cl Br, $CH_3$, $NO_2$, $C_1$-$C_4$-Alkylcarbonylamino oder Benzoylamino und

$Z_1$ und $Z_2$ Wasserstoff oder den Rest der Formel $-SO_2NR_1'R_2'$, jedoch nicht gleichzeitig Wasserstoff bedeuten,

$R_1'$ für $C_2$-$C_4$-Alkylen-$OR_3$,

$R_2'$ für Wasserstoff, $C_1$-$C_4$-Alkyl oder $R_1'$,

$R_3$ für Wasserstoff, $C_1$-$C_4$-Alkyl oder $C_2$-$C_4$-Alkylen-$OR_3'$ stehen

wobei $R_3'$ Wasserstoff oder $C_1$-$C_4$-Alkyl ist und Me die obengenannte Bedeutung hat.

Bevorzugte neue Formazane sind solche der Formel IV, worin

U, V und X Wasserstoff, Chlor oder $NO_2$ (jedoch nicht gleichzeitig $NO_2$),

W, Y und $Z_1$ Wasserstoff,

$Z_2$ $-SO_2NR_1'R_2'$,

$R_1'$ $C_2$-$C_4$-Alkylen-O-$C_1$-$C_2$-Alkyl,

$R_2'$ Wasserstoff, $C_1$-$C_2$-Alkyl oder Hydroxyethyl und

$Me^{(+)}$ ein Natriumion bedeuten.

Die neuen Formazane der Formel IV können nach verschiedenen, an sich bekannten Verfahren hergestellt werden. Ein Verfahren ist dadurch gekennzeichnet, daß man eine aromatische Hydrazonverbindung der allgemeinen Formel

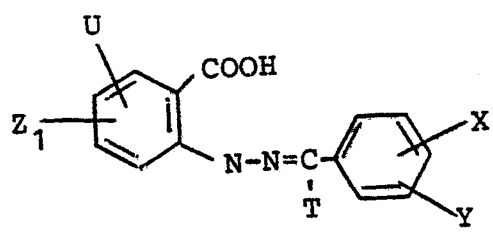

(V)

in welcher

U, X, Y, $Z_1$ die obengenannten Bedeutungen haben und

T Wasserstoff oder einen durch die Azokupplung ersetzbaren Substituenten,

mit der Diazoniumverbindung eines aromatischen Amins der Formel

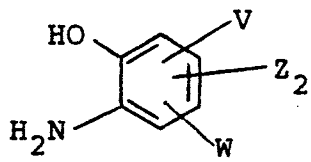

(VI)

worin V, W, $Z_2$ die obengenannten Bedeutungen haben, und mit einem kupferabgebenden Mittel umsetzt. Vorzugsweise wird das Verfahren bei einem pH-Wert von 7 bis 9 und bei einer Temperatur zwischen etwa 0 bis 20°C durchgeführt.

Die Zugabe der Reaktionskomponenten kann beliebig sein, jedoch läßt sich das Verfahren auch leicht als Dreikomponentenreaktion durchführen.

Bedeutet T in Kupplungskomponenten der allgemeinen Formel (V) einen durch Azokupplung ersetzbaren Substituenten, so handelt es sich vorzugsweise um die Formyl- oder Carbonylgruppe oder um einen in die Carboxylgruppe überführbaren Substituenten, wie z.B. eine Cyan-, Carbonsäureester- oder Carbonsäureamidgruppe.

Als kupferabgebende Verbindung kommen die einfachen und die komplexen Salze des Kupfers in Frage, wie beispielswiese Kupfersulfat, Kupferchlorid, Kupferacetat oder Kupfercarbonat und die Kupfersalze der Salicylsäure oder Weinsäure.

Verwendet man die Kupfersalze von Mineralsäuren, so arbeitet man zweckmäßig in Gegenwart eines säureabstumpfenden Mittels, wie beispielsweise eines Alkali- oder Erdalkalihydroxides oder -carbonats oder eines Alkalisalzes einer niederen Alkancarbonsäure, wie der Essigsäure, oder eines basischen Alkalisalzes der Phosphorsäure.

Das kupferabgebende Mittel wird in äquimolaren Mengen verwendet, so daß auf eine zu bildende Verbindung der Formel (I) ein Kupferatom entfällt. Die Hydrazonverbindungen der Formel (V) sind bekannt bzw. nach bekannten Methoden herstellbar. Man gewinnt sie z.B. aus den entsprechenden Phenylhydrazinen, - die beispielsweise aus den Diazoniumverbindungen entsprechender Amine mit Salzen der schwefligen Säure unter Hydrolyse der intermediären N-Sulfonsäuren mit Mineralsäuren hergestellt werden können, - vorzugsweise ohne deren Zwischenisolierung, durch Umsetzung mit Aldehyden der Formel VII

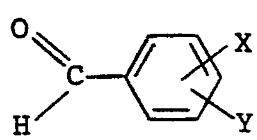

(VII)

die ebenfalls bekannt bzw. in üblicher Weise erhältlich sind.

Die neuen Formazanfarbstoffe der Formel IV zeichnen sich durch gute Gebrauchsechtheiten und vor allem durch eine hervorragende Kombinierbarkeit mit den Rot- und Gelbfarbstoffen der Formeln II und III aus.

Besonders geeignet sind sie zum Färben von Polyamidfasermaterialien für die Herstellung von Oberbekleidung.

Beispiel 1

Man löst 24 Teile des Hydrazons aus Benaldehyd und 2-Carboxy-phenylhydrazin bei einem pH-Wert von 8,5 bis 9,5 in Wasser. Durch Zugabe von Eis kühlt man auf ca. 0-5°C ab und gibt unter Einhaltung des pH-Wertes die Lösung des Diazoniumsalzes aus 31,1 Teilen des Hydrochlorids des Amins der Formel

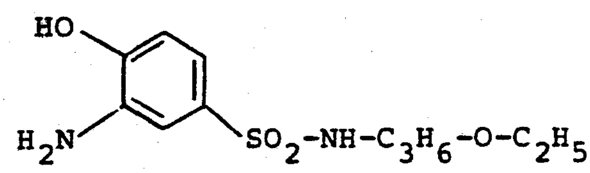

und eine Lösung von 25 Teilen Kupfersulfat ($CuSO_4.5H_2O$) in 100 Teilen Wasser zu. Die Säure wird durch Eintropfen wäßriger Natriumhydroxidlösung neutralisiert.

Die Diazotierung des Amins erfolgt nach bekannten Methoden bei 0-5°C in wäßriger Salzsäure durch Zutropfen von 6,9 Teilen Natriumnitrit gelöst in 20 Teilen Wasser und Zerstörung evtl. überschüssigen Nitrits mit Amidosulfonsäure.

Nach beendeter Kupplung (die Reaktion kann dünnschichtchromatographisch verfolgt werden) filtriert man den ausgefallenen Farbstoff der Formel

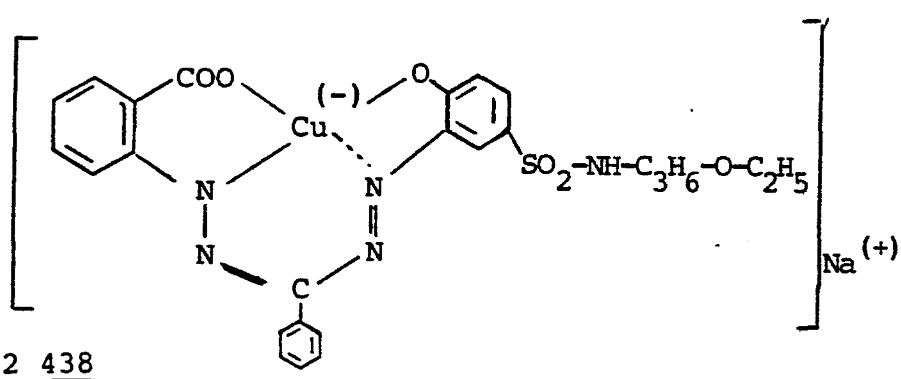

ab, wäscht mit etwas Wasser nach und trocknet. Der erhaltene dunkelblaue Farbstoff färbt Polyamid aus neutralem bis schwach saurem Bade, in relativ klaren, intensiv blauen Tönen mit besonders guter Licht- und Naßechtheit.

Beispiel 2-11

Verwendet man äquimolare Mengen der Hydrazone aus den in der Tabelle angegebenen Hydrazinen und Aldehyden anstelle des entsprechenden Hydrazons in Beispiel 1 und verfährt nach den Angaben in Beispiel 1, so erhält man ebenfalls wertvolle blaue Farbstoffe mit hervoragenden Eigenschaften für die Färbung von Polyamid.

| Beispiel | Hydrazon aus | |
|---|---|---|
| | Hydrazin | Aldehyd |
| 2 | 4-Nitro-2-carboxy-phenylhydrazin | Benzaldehyd |
| 3 | 5-Chlor-2-carboxy-phenylhydrazin | dto. |
| 4 | 5-Methylsulfonyl-2-carboxy-phenylhydrazin | dto. |
| 5 | 4-Acetylamino-2-carboxy-phenylhydrazin | dto. |
| 6 | 5-Sulfonamido-2-carboxx-phenylhydrazin | dto. |
| 7 | 2-Carboxy-phenylhydrazin | 2,4-Dichlor-benzaldehyd |
| 8 | dto. | 2-Chlor-benzaldehyd |

| Beispiel | Hydrazon aus Hydrazin | Aldehyd |
|---|---|---|
| 9 | 2-Carboxy-phenylhydrazin | 2-Methyl-benzaldehyd |
| 10 | dto. | 4-Chlor-benzaldehyd |
| 11 | dto. | 1-Naphtaldehyd |

Beispiel 12-36

Ersetzt man in Beispiel 1 das Amin durch 29,7 Teile des o-Aminophenolderivats der Formel (als Hydrochlorid)

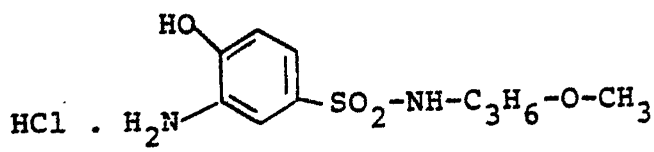

verfährt ansonsten wie oben, so erhält man den Farbstoff der Formel

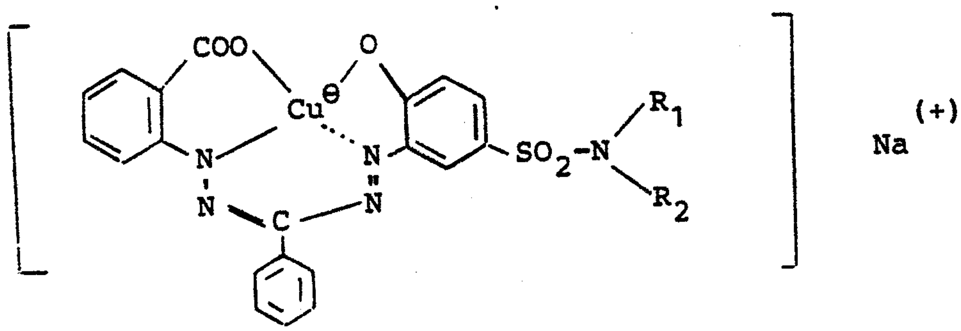

als dunkles Pulver. Er färbt Polyamid aus neutralem bis schwach saurem Bade in klaren, intensiv blauen Tönen.

Nach diesem Verfahren unter Verwendung von je 0,1 Mol der o-Aminophenole aus der folgenden Tabelle erhält man ebenfalls vorzügliche blaue Farbstoffe für die Färbung von Polyamid.

| Beispiel | o-Aminophenol | |
|---|---|---|
| | $R_1$ | $R_2$ |
| 13 | H | $C_3H_6-O-C_2H_4-OCH_3$ |
| 14 | H | $C_3H_6-O-C_2H_4-OH$ |
| 15 | H | $C_2H_4-O-C_2H_4-OH$ |
| 16 | H | $C_2H_4-O-C_2H_4-OCH_3$ |
| 17 | H | $C_2H_4-O-C_2H_4-OC_2H_5$ |
| 18 | H | $C_2H_4-O-C_2H_5$ |
| 19 | H | $C_2H_4-O-CH_3$ |
| 20 | H | $C(CH_3)_2-C_2H_4-OH$ |
| 21 | $CH_3$ | $C_3H_6-OH$ |
| 22 | $CH_3$ | $CH_2-CH(CH_3)-OH$ |
| 23 | $CH_3$ | $C_2H_4-O-CH_3$ |
| 24 | $n-C_3H_7$ | $CH_2-CH(CH_3)-OH$ |
| 25 | $C_2H_5$ | $C_2H_4-OH$ |
| 26 | $C_2H_4-OH$ | $C_2H_4-CN$ |
| 27 | $C_2H_4-OH$ | $C_3H_6-O-C_2H_5$ |
| 28 | $C_2H_4-OH$ | $n-C_3H_7$ |
| 29 | $C_2H_4-OH$ | $C_3H_6-O-CH_3$ |
| 30 | $C_2H_4-OH$ | $CH_2-CH(CH_3)_2$ |
| 31 | $C_2H_4OH$ | $n-C_4H_9$ |
| 32 | $C_2H_4-CN$ | $C_2H_4-O-C_2H_4-OH$ |
| 33 | $C_2H_4OH$ | $C_2H_4OH$ |
| 34 | $CH_2-CH(OH)-CH_3$ | $CH_2-CH(OH)-CH_3$ |
| 35 | $C_3H_6-OH$ | $n-C_4H_9$ |
| 36 | $C_2H_4-OH$ | $C_6H_5$ |

Beispiel 37

33 Teile der Verbindung der Formel

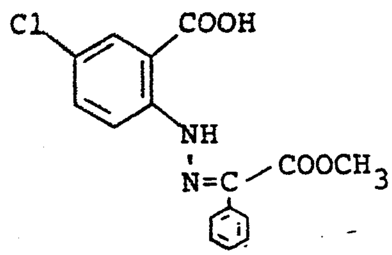

werden in 250 Teilen Wasser mit 24 Teilen 45 %iger Natronlauge 30 Minuten auf ca. 90-95°C erhitzt. Wenn die Verseifung (Dünnschichtchromatographie) beendet ist, wird abgekühlt auf 0-5°C und mit wäßriger Salzsäure der pH-Wert auf 7,5 - 8,5 gestellt. Unter Einhaltung des pH-Wertes wird mit dem Diazoniumsalz des o-Aminophenols analog Beispiel 1 gekuppelt und mit 25 Teilen Kupfersulfat ($CuSO_4 . 5H_2O$) zum Formazan der Formel

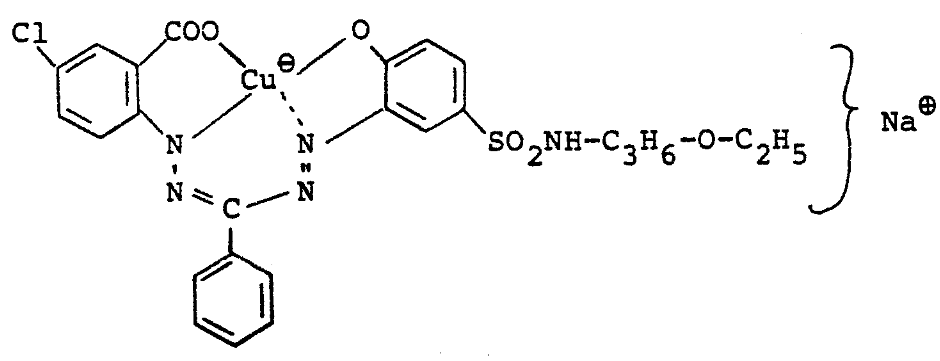

umgesetzt.

Der Farbstoff färbt Polyamid aus neutralem bis schwach saurem Bade in intensiven blauen Tönen.

Beispiel 38

0,175 g des blauen Farbstoffs aus Beispiel 1 und 0,12 g C.I. Acid Orange 116 werden in 2000 ml Wasser heiß gelöst und nach Zugabe von 2 g Essigsäure (30 Gew.-%ig) auf 5000 ml aufgefüllt. In das Färbebad gibt man bei ca. 40°C 100 g Textilgewebe aus Polyamid 6 zu, erhitzt innerhalb 30 Minuten auf Kochtemperatur und hält 60 Min. bei dieser Temperatur. Das gefärbte Material wird regelmäßig bewegt, nach der Färbung aus dem Bad entfernt, mit Wasser gespült und bei 60-70°C getrocknet. Man erhält eine sehr gleichmäßige Olivfärbung von guter Licht- und Naßechtheit.

Beispiel 39

0,175 g des blauen Farbstoffs aus Beispiel 1 und 0,1 g C.I. Acid Red 299 werden nach den Angaben von Beispiel 38 zum Färben von Polyamid 6 verwendet. Man erhält eine ebenfalls sehr gleichmäßige Violettfärbung mit sehr guten Echtheiten.

Beispiel 40

0,175 g des blauen Farbstoffs aus Beispiel 1 und 0,16 g C.I. Acid Yellow 242 werden nach den Angaben von Beispiel 38 zum Färben von Polyamid 6 verwendet. Man erhält eine egale Grünfärbung mit guten Licht- und Naßechtheiten.

Beispiel 41

100 g Textilgewebe aus Polyamid 6 werden mit 0,12 g des blauen Farbstoffs aus Beispiel 1, 0,067 g C.I. Acid Red 299 und 0,08 g C.I. Acid Orange 116 nach den Angaben in Beispiel 38 gefärbt. Man erhält eine sehr gleichmäßige Braunfärbung, die gute Licht- und Naßechtheiten aufweist.

Patentansprüche

1. Verfahren zum Färben von natürlichen und synthetischen Polyamidfasern, dadurch gekennzeichnet, daß man eine Kombination aus

   a) einem sulfo- und carboxylgruppenfreien, nichtreaktiven Blaufarbstoff der Formel

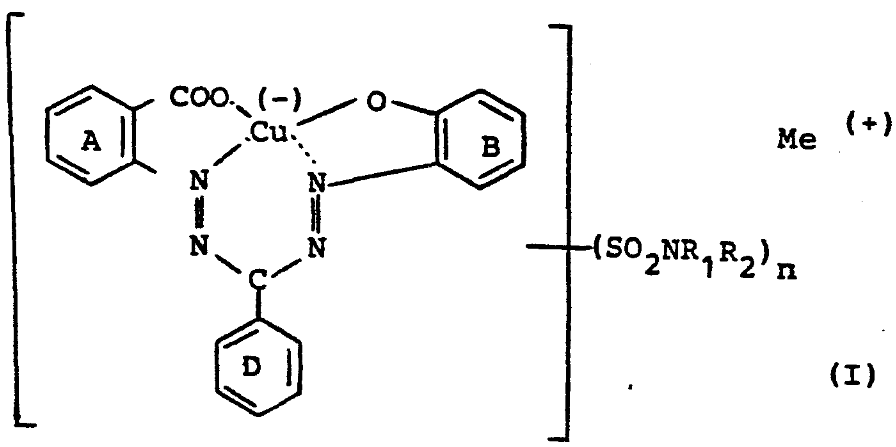

(I)

worin

R$_1$ Wasserstoff, gegebenenfalls substituiertes Alkyl, Aralkyl, Alkenyl, Cycloalkyl oder Aryl,

R$_2$ Wasserstoff oder Alkyl,

Me $^{(+)}$ ein Kation und

n die Zahlen 1 oder 2 bedeuten, wobei die Ringe A, B und D weitere in der Farbstoffchemie übliche nichtionische Substituenten tragen können und der Rest $-SO_2NR_1R_2$ mit Ring A und/oder B verknüpft ist,

b) einen Rotfarbstoff der Formel

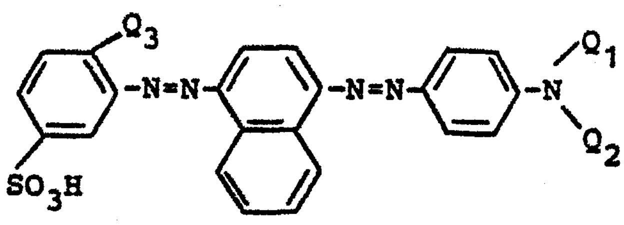

(IIa)

worin $Q_1$ $C_2H_5$ oder $C_2H_4OH$

$Q_2$ $C_2H_5$, $C_2H_4OH$, $CH_2$- 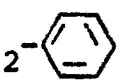 oder $CH_2$- 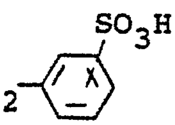

$Q_3$ H, Cl oder $CH_3$ bedeuten oder

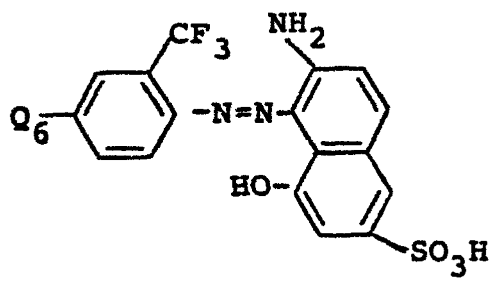

(IIb)

$Q_6$ = Cl, $NHCOQ_7$,

$Q_7$ = $C_1$-$C_4$-Alkyl, Phenyl, Cyclohexyl, NH-$C_1$-$C_4$-Alkyl, NH-Phenyl oder NH-Cyclohexyl, oder

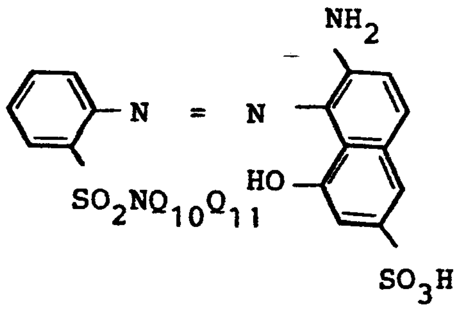

(IIc)

$Q_{10}$ = H, $C_1$-$C_{10}$-Alkyl, Cyclohexyl, Phenyl
$Q_{11}$ = H, $C_1$-$C_4$-Alkyl

c) einen Gelbfarbstoff der Formel

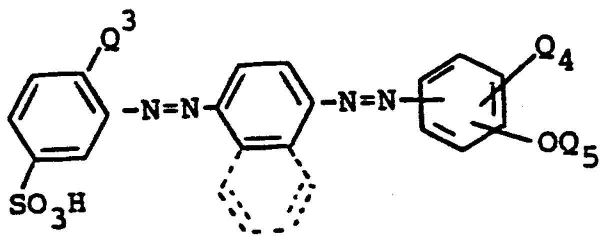

(IIIa)

oder

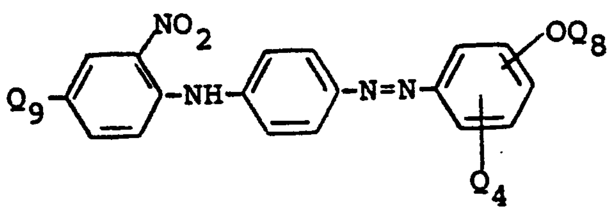

(IIIb)

$Q_8$ = $C_1$-$C_4$-Alkyl, $-SO_2-$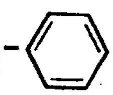 , $C_1$-$C_4$-Hydroxy-alkyl

$Q_9$ = $SO_3H$, $SO_2NHSO_2-$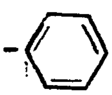 , $SO_2NHSO_2-C_1-C_4-$Alkyl,

worin

$Q_4$ H oder $CH_3$ und

$Q_5$ $C_1$-$C_4$-Alkyl (vorzugsweise $CH_3$ oder $C_2H_5$) oder $C_2$-$C_4$-Hydroxyalkyl (vorzugsweise $CH_2CHOHC_2H_5$)

bedeuten, wobei $-OQ_5$ in ortho- oder para-Stellung zur Azobrücke steht,

verwendet.

2. Verfahren nach Anspruch 1, dadurch gekennzeichnet, daß man Farbstoffe der angegebenen Formel verwendet, worin $R_1$ ein Alkoxyalkylrest ist.

3. Farbstoffe der Formel

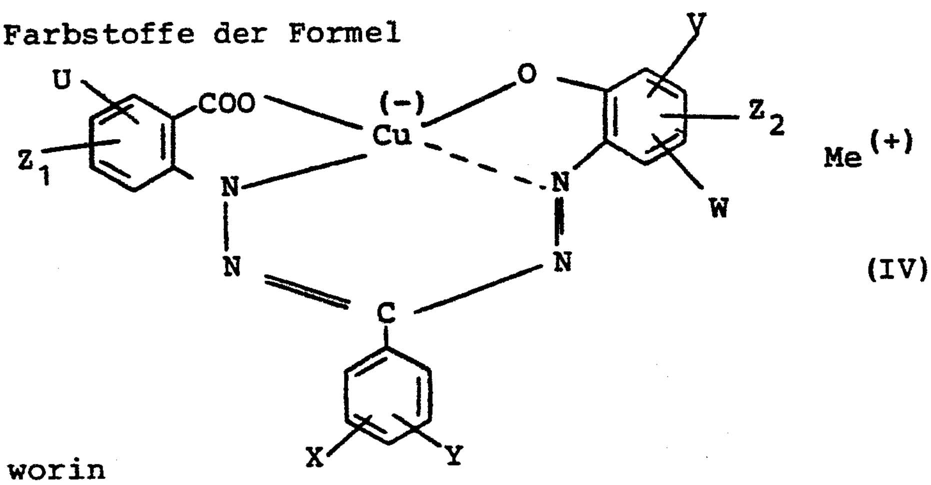

(IV)

worin

U, V, W, X und Y unabhängig voneinander Wasserstoff, Cl, Br, $CH_3$, $NO_2$, $C_1$-$C_4$-Alkylcarbonylamino oder Benzoylamino und

$Z_1$ und $Z_2$ Wasserstoff oder den Rest der Formel $-SO_2NR_1'R_2'$, jedoch nicht gleichzeitig Wasserstoff bedeuten,

$R_1'$ für $C_2$-$C_4$-Alkylen-$OR_3$,

$R_2'$ für Wasserstoff, $C_1$-$C_4$-Alkyl oder $R_1'$,

$R_3$ für Wasserstoff, $C_1$-$C_4$-Alkyl oder $C_2$-$C_4$-Alkylen-$OR_3'$ stehen,

wobei $R_3'$ Wasserstoff oder $C_1$-$C_4$-Alkyl ist und Me die obengenannte Bedeutung hat.

4. Farbstoffe gemäß Anspruch 3, dadurch gekennzeichnet, daß

U, V und X Wasserstoff, Chlor oder $NO_2$ (jedoch nicht gleichzeitig $NO_2$),

W, Y und $Z_1$ Wasserstoff,

$Z_2$ $-SO_2NR_1'R_2'$,

$R_1'$ $C_2$-$C_4$-Alkylen-O-$C_1$-$C_2$-Alkyl,

$R_2'$ Wasserstoff, $C_1$-$C_2$-Alkyl oder Hydroxyethyl und

$Me^{(+)}$ ein Natriumion bedeuten.

5. Farbstoff gemäß Anspruch 3 der Formel

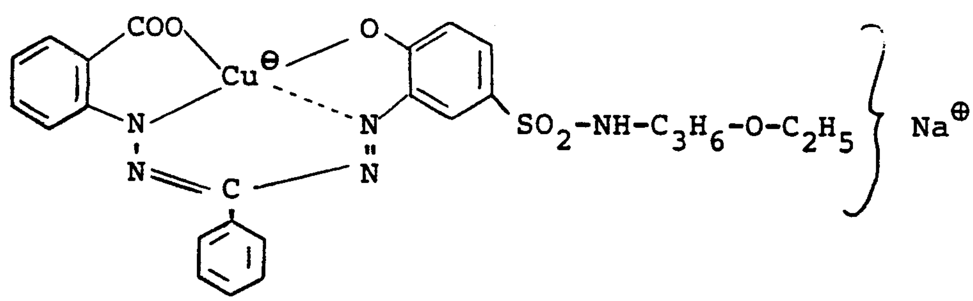

6. Verfahren zur Herstellung von Farbstoffen gemäß Anspruch 3, dadurch gekennzeichnet, daß man eine aromatische Hydrazonverbindung der allgemeinen Formel

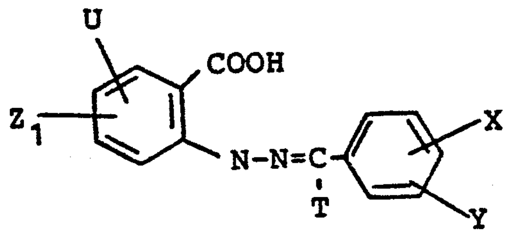

(V)

in welcher

X, Y, $Z_1$ die oben genannten Bedeutungen haben und

T Wasserstoff oder einen durch die Azokupplung ersetzbaren Substituenten

mit der Diazoniumverbindung eines aromatischen Amins der Formel

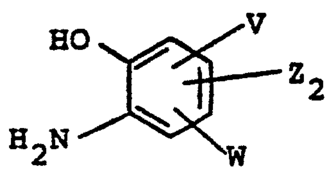

(VI)

worin V, W, $Z_2$ die oben genannten Bedeutungen haben, und mit einem kupferabgebenden Mittel umsetzt.